# EUROPEAN PATENT SPECIFICATION

(11) **EP 1 212 204 B1**
(45) Date of publication and mention of the grant of the patent: **26.01.2005**
(21) Application number: 01937244.0
(22) Date of filing: 03.05.2001
(51) Int. Cl.: B60G 11/02, B60G 11/46

(54) **VEHICLE SUSPENSION SYSTEMS**
FAHRZEUGAUFHÄNGUNGSSYSTEME
SYSTEMES DE SUSPENSION POUR VEHICULE

(30) Priority: 04.05.2000 GB 0010611
(43) Date of publication of application: 12.06.2002
(73) Proprietor: DETROIT STEEL PRODUCTS CO., INC., Morristown, IN 46161 (US)
(72) Inventor: GLASS, Michael, F., Indiananapolis, IN 46237 (US)
(74) Representative: Britter, Keith Palmer
(86) International application number: PCT/US2001/014771
(87) International publication number: WO 2001/083243

(56) References cited:
- EP-A- 0 605 398
- FR-A- 2 056 931
- FR-A- 2 723 342
- GB-A- 2 170 154
- US-A- 4 919 399
- US-A- 5 662 357
- US-A- 5 785 345

## Description

This invention relates to vehicle suspension systems which may be installed on vehicles, such as medium weight trucks or buses, for both front and rear axles, although the invention may also be applicable to heavier light truck and heavy truck suspension applications.

Conventionally, two main spring systems have been used on medium weight trucks and buses, namely steel leaf springs and air springs. It is common for a manufacturer to offer steel springs as a low cost option on, for example, the basic model, and to offer an air spring system as the high cost option on higher specification models.

However, due to the leaf spring option being offered on lower cost base vehicles, a vehicle with a mediocre ride is often the result as the cost of the suspension is held down to reduce costs. Thus, the higher cost air spring system is perceived as being the quality riding option.

Modem developments in leaf spring technology have, however, yielded leaf spring suspension systems which provide a vehicle with ride and handling characteristics which can be as good or even better than many air spring systems. Such development requires a substantial capital outlay or higher vehicle costs although the complete leaf spring systems are still at a considerably lower price than corresponding air spring systems.

Such leaf spring systems, in certain applications, can show disadvantages over corresponding air spring systems. For example, in order to achieve a high quality ride, steel leaf springs need to have considerable deflections from the full load to the free, or no-load, condition. On vehicles with a high variation of imposed load, such as trucks, buses and the like, these suspensions would have to have a very soft rate when unladen to maintain a quality ride. Such a corresponding soft rate would require a larger overall spring deflection.

Such large deflections can create a variety of problems in certain applications. This problem is avoided in air spring systems as the rate can be altered at virtually constant ride height by varying the pressure of the air spring.

In other applications, such as when the vehicle is subjected to a small variation in load between unladen and laden such deflections can be acceptable. Front suspensions on trucks and certain specialist truck and bus front and rear suspensions may accept large deflections, although a plurality of other problems may also arise which disadvantages leaf spring systems over air spring systems.

For example, if a vehicle is fitted with soft-rate, large deflection, leaf springs and it is loaded unsymmetrically, in a transverse sense, the vehicle will lean very badly. Such a problem is particularly evident on front suspension systems where the springs are narrowly installed across the vehicle to allow the wheels to turn when steering. Typically, a 13 mm variance in spring height from side to side on these front suspension systems results in a 38 mm variance between the height of the wheel arches. In air spring systems such a problem is overcome by sensing the vehicle height across the vehicle and adjusting the pressure in each air spring to compensate, thereby leveling the vehicle.

To over come these problems it is possible to add an auxiliary spring to the regular leaf spring. The auxiliary spring is normally an air spring which is loaded in parallel with the leaf spring, which causes its rate to be added to that of the leaf spring, thereby stiffening the overall rate and reducing the ride quality.

An alternative solution is to mount the auxiliary spring in series with the main leaf spring. This, however, creates an extremely soft ride with the result that the rate of the main spring has to be considerably stiffened. Due to the particular configuration of this suspension system, it is necessary to install transverse location axle rods which increase the cost and decrease the ease of installation. Furthermore, the loading and unloading geometry is altered with respect to that of parallel installations such that adverse or different geometry characteristics are shown.

In FR-A-2056931, there is disclosed a conventional multi-leaf suspension, such as that shown in Figure 1 of the present application, whilst US-A-4919399 describes another conventional multi-leaf suspension, such as that shown in Figure 2 of the application.

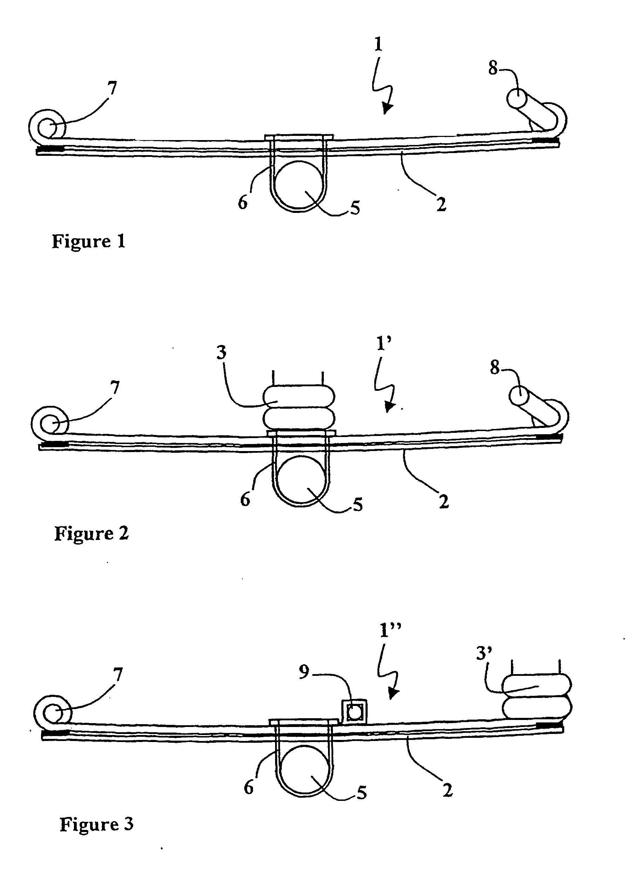

In Figure 3 of the present application, there is shown a further conventional multi-leaf suspension for a vehicle wheel set (on which the preamble of claim 1 is based), comprising an upper leaf spring and a lower leaf spring, means for attaching the upper and lower leaf springs to a vehicle axle generally transversely thereof, the front end of the upper leaf spring comprising means for the connection thereof to an associated vehicle chassis, and auxiliary spring means mounted in series with the upper leaf spring at the rear end thereof.

Accordingly it is an object of the invention to provide a vehicle suspension system which gives a high quality ride and one whose axle deflection geometric characteristics are not substantially altered by the associated vehicle being laden or unladen, whilst obviating or at least substantially reducing the problems associated with the prior art systems.

It is another object of the invention to provide a multi-leaf, vehicle suspension system which affords an associated vehicle with ride characteristics and dynamic deflection geometry substantially the same as those of a conventional solo leaf spring system.

A further object of the invention resides in the need to provide a multi-leaf vehicle suspension system having auxiliary spring means capable of altering the spring rate in proportion to the imposed load at constant ride height.

Thus, the suspension system of the present invention is characterised in that the rear end of the lower leaf spring comprises means for pivotal connection thereof to the vehicle chassis.

The auxiliary spring means preferably comprises an air spring, although it may alternatively comprise hydraulic, hydro-pneumatic, electro-mechanical or manual spring means.

The auxiliary spring means may further comprise means arranged to detect the height across the vehicle and to adjust the auxiliary spring means to compensate for the difference in height.

The system may also be arranged to obviate or substantially reduce torsion being applied to the axle and preferably maintain the full axle control of a conventional leaf spring system. The system may further be arranged to mimic the dynamic deflection geometry of a conventional leaf spring system around the normal loading range.

In order that the various aspects of the invention are more fully understood, preferred embodiments of the invention in accordance therewith will now be described by way of example only and with reference to the accompanying drawings in which:
Figure 1 shows a side elevation of a prior art solo leaf spring suspension system;
Figure 2 shows a side elevation of a second prior art suspension system;
Figure 3 shows a side elevation of a third prior art suspension system (on which the preamble of claim 1 is based),
Figure 4 shows the dynamic deflections of the prior art suspension system shown in Figure 1;
Figure 5 shows the dynamic deflections of the prior art suspension system shown in Figure 3; and
Figure 6 shows a side elevation of an embodiment of inventive suspension system.

Referring firstly to Figure 1, there is shown a known, solo leaf spring suspension system, generally indicated at 1 and comprising a two-leaf spring 2 mounted transversely of an associated vehicle axle 5 and secured thereto by a bracket 6, as is well established in the art. The suspension system 1 is mounted such that it is aligned with and substantially parallel to the longitudinal axis of an associated vehicle, the axle 5 being located normally with respect to that axis. The spring 2 is attached to the chassis of the associated vehicle at a front eye 7 and a rear shackle 8.

As previously stated, such suspension systems 1 can afford a high-quality ride as long as there is a considerable deflection between unladen and laden conditions. As discussed above, several problems are known for vehicles with such soft springs and consequently possible solutions have been proposed.

Figure 2 details one such possible solution, in which another known suspension system, generally indicated at 1', comprises a two-leaf spring 2 which is mounted in parallel with an auxiliary spring 3. Throughout the description the other, identical components are denoted by the same numbers used in relation to Figure 1.

The auxiliary spring 3 is a small air spring which can be 'height sensed' to raise the spring when it is highly loaded to level the associated vehicle to the required height. Alternatively, the overall pressure in the system can be raised to increase the vehicle height for operating over rough ground or in other difficult terrain.

However, because the two springs are loaded in parallel the rate of the air spring 3 is added to that of the leaf spring 2 which has the effect of considerably stiffening the overall rate. Moreover, these relatively small air springs 3 tend to be fairly stiff in relation to the loads which they carry. Thus, the addition of such air springs 3 considerably stiffens the suspension, concomitantly reducing the ride quality and, in some cases, reducing the front to rear suspension balance.

If the main spring 2 is softened in an attempt to improve the ride quality, the axle control stiffness under braking and traction is reduced, which can lead to problems with steering and prop-shaft angles.

Figure 3 shows a proposed solution to the problems associated with the suspension system 1', as shown in Figure 2. A further known suspension system, generally indicated at 1", comprises an auxiliary air spring 3' mounted at the rear of the main spring 2. As the main spring 2 cannot be shackled at the rear, as was the case in the other prior art systems 1, 1', the suspension system 1'' further comprises a transverse control rod 9 mounted above the two-leaf spring 2 to provide the necessary transverse axle control.

In this system 1'' the air spring 3' has to accommodate the full, rear, leaf spring cantilever and consequently the air spring 3' has to be larger than that which would normally be chosen for parallel installations. Such large air springs 3' tend to be softer relative to their loading than small air springs and consequently this, combined with the known effects of series loading, often creates a system 1'' which is too soft for normal practical installations.

This series installation, 1'', creates a further problem in that as the proportion of the system isolation provided by the air springs 3' increases, the more reactive the system 1'' becomes during braking and traction. Furthermore, the necessary inclusion of the transverse control rod 9 makes the system 1'' more expensive and difficult to install due to the obstruction across the associated vehicle.

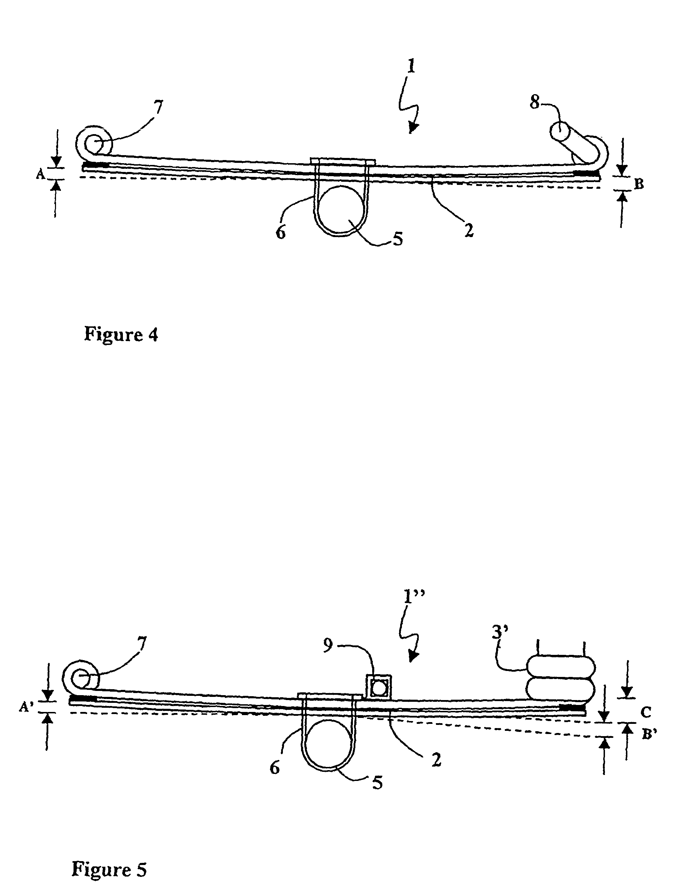

Moreover, the dynamic deflection geometry of this system 1" is dramatically altered compared with the single leaf spring system 1. Figures 4 and 5 show the dynamic deflection geometry for the two systems 1 and 1'' respectively.

Figure 4 shows the system 1 of Figure 1 being placed under a load, with A and B representing the dynamic deflections of the front and rear of the spring 2 respectively. As can be seen, for symmetrical springs A is equal to B and the axle 5 deflects squarely.

Figure 5 shows the system 1'' of Figure 3 being placed under a load, with A' and B' representing the dynamic deflections of the front and rear of the spring respectively and C representing the air spring deflection. The deflection of the rear cantilever is the sum of the deflections B' and C, whereas that of the front cantilever is A'. As is clearly demonstrated in the Figure, A' is less than the sum of B' and C. Consequently, the axle 5 will rotate when the springs deflect. Such rotation of the axle 5, caused by the large extra angle changes, can cause problems with both the steering of the vehicle and with drive axle propeller shaft angles.

Both Figure 4 and 5 show symmetrical cantilevers, although the problem is just as severe with asymmetrical springs. Indeed, when height leveling or adjustment is applied to the air spring 3' it can also cause unusual axle rotation.

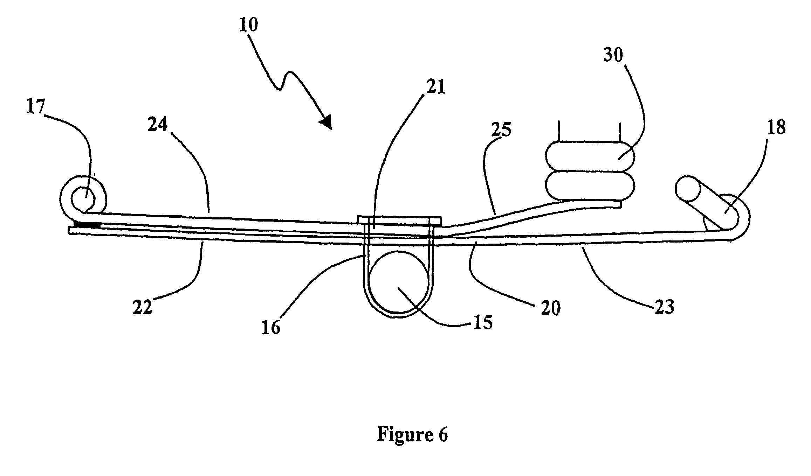

Figure 6 illustrates an inventive solution to this problem, in which, a suspension system, generally indicated at 10, comprises a pair of leaf springs 20, 21 attached to an axle 15 by virtue of a bracket 16. The upper leaf spring 21 is attached to the chassis of an associated vehicle at an eye 17 and the lower leaf spring 20 is pivotally connected to the vehicle chassis by a shackle 18. Each of which lower and upper leaf springs 20, 21 comprises a front and rear cantilever 22, 23 and 24 and 25 respectively

An air spring 30 is mounted upon the upper leaf spring 21 toward the rear thereof. Consequently, the rear cantilever 25 of the upper leaf spring 21 and the air spring 30 are mounted in series, which effectively softens the rate of the air spring 30.

As the air spring 30 is mounted well toward the rear of the upper leaf spring 21, the front cantilever 22, 24 carries almost as much load as the standard solo leaf spring system 1, as described above with reference to Figure 1. Thus, the front cantilever 22, 24 can have the same rate at full load and thereby maintain axle control therefrom.

The rear cantilever 23 of the lower leaf 21 is mounted onto the chassis of the associated vehicle at a shackle 18 in a similar fashion to the single leaf suspension system 1. The rate of the air spring 30 and upper leaf cantilever 25, as well as that of the lower leaf 20, can be adjusted to give substantially the same effective load displacement at the rear cantilevers 23, 25 as with the standard, solo leaf spring system 1. Thus, both rear and front cantilevers 23, 25 and 22, 24 respectively afford similar or substantially identical rates at full load to that of the single leaf spring suspension system 1 and consequently maintain similar axle control.

The dynamic geometry of the system 10 at the design load is, therefore, practically identical to that of the prior art system 1. The geometry can be designed such that the dynamic geometry of the system 10 is identical to the prior art system 1 throughout its operation, provided that the load variation between laden and unladen operating conditions is not too great.

The system 10 also allows for conventional height sensing control to be moved toward the rear of the springs 21 and away from the axle centre. This reduces the higher load that the second leaf 20, rear cantilever 23, 25 would otherwise have to accommodate as the air pressure is reduced at constant spring height.

Whilst the system 10 has been described with reference to a two leaf spring system, it could equally apply to a system comprising more than two leaves. In such applications the upper leaf configuration would remain identical to that described with reference to Figure 6, whereas the lower leaf is duplicated to suit the particular usage. Furthermore, the inventive system 10 has been described as comprising an auxiliary air spring 30, whilst it is entirely possible to provide other forms of spring assistance. For example, the auxiliary spring could be hydraulic, hydro-pneumatic, electro-mechanical or manual mechanical or any other form of conventional spring assistance. The shackle 18 may also be any generally used rear leaf spring mounting.

## Claims

1. A suspension system (10) for a vehicle wheel set comprising:
an upper leaf spring (21) and a lower leaf spring (20);
means (16) for attaching the upper and lower leaf springs (21, 20) to a vehicle axle (15) generally transversely thereof, the front end of the upper leaf spring (21) comprising means (17) for connection thereof to an associated vehicle chassis; and
auxiliary spring means (30) mounted in series with the upper leaf spring (21) at the rear end thereof,
**characterised in that** the rear end of the lower leaf spring (20) comprises means (18) for pivotal connection thereof to the vehicle chassis.

2. A system (10) according to claim 1, wherein said auxiliary spring means (30) comprises an air spring.

3. A system (10) according to claim 1 or 2, wherein said auxiliary spring means (30) comprises hydraulic, hydro-pneumatic, electro-mechanical or manual mechanical spring means.

4. A system (10) according to claim 1, 2 or 3, wherein said auxiliary spring means (30) comprises means arranged to detect the height across the vehicle and to adjust the auxiliary spring means (30) to compensate for any difference in that height.

5. A system (10) according to any preceding claim, wherein the components are arranged to obviate or substantially reduce torsion being applied to the axle and thereby maintain the full axle control of a conventional leaf spring system.

6. A system (10) according to any preceding claim which is further arranged to mimic the dynamic deflection geometry of a conventional leaf spring system around the normal loading range.

## Patentansprüche

1. Aufhängungssystem (10) für einen Fahrzeugradsatz, welches aufweist:
eine obere Blattfeder (21) und eine untere Blattfeder (20);
eine Einrichtung (16) zum Befestigen der oberen und unteren Blattfeder (21, 20) an einer Fahrzeugachse (15), im allgemeinen quer dazu, wobei das vordere Ende der oberen Blattfeder (21) eine Einrichtung (17) zum Verbinden derselben mit einem zugehörigen Fahrzeugchassis aufweist; und
eine Hilfsfederungseinrichtung (30), die in Reihe mit der oberen Blattfeder (21) an deren hinterem Ende befestigt ist,
**dadurch gekennzeichnet, dass** das hintere Ende der unteren Blattfeder (20) eine Einrichtung (18) für eine Schwenkverbindung derselben mit dem Fahrzeugchassis aufweist.

2. System (10) nach Anspruch 1, wobei die Hilfsfederungseinrichtung (30) eine Luftfeder aufweist.

3. System (10) nach Anspruch 1 oder 2, wobei die Hilfsfederungseinrichtung (30) eine hydraulische, hydropneumatische, elektromechanische oder manuelle mechanische Federungseinrichtung aufweist.

4. System (10) nach Anspruch 1, 2 oder 3, wobei die Hilfsfederungseinrichtung (30) eine Einrichtung aufweist, die so angeordnet ist, dass sie die Höhe über das Fahrzeug detektiert und die Hilfsfederungseinrichtung (30) so einstellt, dass sie jeglichen Höhenunterschied ausgleicht.

5. System (10) nach einem der vorhergehenden Ansprüche, wobei die Komponenten so angeordnet sind, dass die Torsion, die auf die Achse ausgeübt wird, verhindert oder im wesentlichen reduziert wird, und dadurch die volle Achskontrolle eines herkömmlichen Blattfedersystems beibehalten wird.

6. System (10) nach einem der vorhergehenden Ansprüche, welches weiterhin vorgesehen ist, um die dynamische Auslenkungsgeometrie eines herkömmlichen Blattfedersystems um den normalen Belastungsbereich herum nachzuahmen.

## Revendications

1. Système de suspension (10) pour train de roues de véhicule, comprenant :
un ressort à lames supérieur (21) et un ressort à lames inférieur (20) ;
des moyens (16) pour relier les ressorts à lames supérieur et inférieur (20, 21) à un essieu de véhicule (15), de manière générale transversalement à celui-ci, l'extrémité avant du ressort à lames supérieur (21) comprenant des moyens (17) pour relier celui-ci à un châssis de véhicule associé ; et
des moyens formant ressort auxiliaire (30) montés en séries avec le ressort à lames supérieur (21), au niveau de l'extrémité arrière de celui-ci,
**caractérisé en ce que** l'extrémité arrière du ressort à lames inférieur (20) comprend des moyens (18) destinés à relier celui-ci de manière pivotante au châssis de véhicule.

2. Système (10) selon la revendication 1, dans lequel lesdits moyens formant ressort auxiliaire (30) comprennent un ressort pneumatique.

3. Système (10) selon la revendication 1 ou 2, dans lequel lesdits moyens formant ressort auxiliaire (30) comprennent des moyens formant ressort hydraulique, hydropneumatique, électromécanique ou mécanique manuel.

4. Système (10) selon la revendication 1, 2 ou 3, dans lequel lesdits moyens formant ressort auxiliaire (30) comprennent des moyens conçus pour détecter la hauteur transversalement au véhicule et pour ajuster les moyens formant ressort auxiliaire (30) afin de compenser une variation de cette hauteur.

5. Système (10) selon l'une quelconque des revendications précédentes, dans lequel les organes sont conçus pour empêcher ou pour réduire sensiblement l'application d'une torsion à l'essieu et pour ainsi maintenir le contrôle total de l'essieu d'un système de ressort à lames conventionnel.

6. Système (10) selon l'une quelconque des revendications précédentes, également conçu pour imiter la géométrie de déformation dynamique d'un système de ressort à lames conventionnel autour de la plage de charge normale.
